# EUROPEAN PATENT SPECIFICATION

(11) **EP 2 848 655 B1**
(45) Date of publication and mention of the grant of the patent: **30.05.2018**
(21) Application number: 14160118.7
(22) Date of filing: 14.03.2014
(51) Int. Cl.: C09D 5/00

(54) **Porous silicon oxide drying agents for waterborne latex paint compositions**
Poröse Siliziumdioxid-Trockenmittel für wässrige Latexfarbenzusammensetzung
Agents de séchage d'oxyde de silicium poreux pour des compositions de peinture latex aqueuses

(30) Priority: 11.09.2013 US 201314024035; 26.02.2014 US 201414190820
(43) Date of publication of application: 18.03.2015
(73) Proprietor: Potters Industries, LLC, Wilmington DE 19808 (US)
(72) Inventor: Jeganathan, Suruliappa, Chadds Ford, Pennsylvania 19317 (US); Davies, Chris, Plymouth Meeting, Pennsylvania 19462 (US); Goforth, Kevin, Chester Springs, Pennsylvania 19425 (US)
(74) Representative: Stafford, Jonathan Alan Lewis

(56) References cited:
- EP-A1- 0 525 977
- EP-A1- 1 158 028
- EP-A2- 0 791 637
- US-A- 4 132 560
- US-A- 5 824 734

## Description

### BACKGROUND OF THE INVENTION

### Field of the Invention

The present invention relates to the field of drying agents for waterborne paints and more particularly to porous silica drying agents for rapidly drying waterborne latex paint compositions.

### Description of the Related Art

Two desirable features for highway marking paint compositions are that the compositions are durable and that they dry rapidly. Because of the manpower involved in marking roadways and the associated material costs, it is desirable that a highway marking last a minimum of 4 years and more preferably up to 7 years or longer. Moreover, it is highly desirable that the highway marking dry rapidly to prevent the paint from running across the roadway and to minimize the disruption to traffic flow while the highway marking is being applied.

One technique to enhance durability is to apply a thicker layer of paint. A thin paint layer of 0.635 mm (25 mil) or less will likely have a 1 year life and at best 2-3 years. A thicker paint layer of 1.524 mm (60 mil) or greater will typically last for 4-7 years. Accordingly, there is a strong desire to apply a thicker paint layer when marking highways. It will be appreciated that the unit "mil" as recited herein refers to one thousandth of an inch.

The main constraint to applying a thick highway paint layer is the drying time of the paint. Thermoplastic materials that are heated immediately after application to set the paint layer have regularly been used to obtain the desired thick highway paint layer. However, because of its cost and need for extra machinery, there has been an effort to develop a less expensive paint system. Several of these systems are discussed below.

U.S. Patent No. 6,013,721 describes the use of polymer containing one acid and one amine functionality to improve the storage stability and drying time of the waterborne paint. The system was able to produce a paint layer having a wet film thickness of 0.3556 mm (14 mil).

U.S. Patent No.5,544,972 shows the use of spraying mineral acid into paint stream to accelerate the drying time of binders. This acid spray when comes to contact with paint coagulates the resin salt by an acid-base reaction. This method is not practical in roads as use of mineral acids pose a lot health and other problems.

U.S. Patent No. 5,947,632 describes the use of ion exchange resins as drying agents. Ion exchange resins are hollow polymers which absorb water in the paint and reduce the drying time on traffic markings. Such ion exchange resins include super absorbent polymeric gels (Sumica gel) and solid hollow sphere polymers (Ropaque® OP-62). This patent also mentions inorganic compounds capable of absorbing water by coordination, although experimental examples are provided only for the ion exchange resins.

U.S. Patent No 6,132,132 discloses various types of drying agents including ion exchange resins, superabsorbent gels such as Sumica gel, and hollow-sphere polymers such as Ropaque® OP-62 to improve the drying time of the waterborne paint for traffic markings.

U.S. Patent No. 6,475,556 discusses the need for fast drying of thick films of waterborne paint above 0.508 mm (20 mil) and up to 3.048 mm (120 mil) in thickness. However methods are disclosed that only dry films of 0.508-1.016 mm (20-40 mil) wet thickness. An ion exchange resin is used as the drying agent and a small amount of polyamine resin is added to the binder as well.

U.S. Patent No. 6,413,011 describes multicomponent fast drying waterborne coatings of 0.3302-0.381 mm (13-15 mil) wet film thickness. These coatings include extenders such as calcium carbonate, talc, silica and silicates as well as fillers such as glass beads, quartz and sand. The disclosed extenders are hard dense materials.

U.S. Patent No. 6,645,552 describes the use of ion exchange resin as drying agent for waterborne paint with wet mil thickness of 0.762 mm (30 mil). The paint is applied as a wet on wet or layer by layer coating; with each layer being 0.381 mm (15 mil).

U.S. Patents Nos. 6,013,721, 5,947,632, 6,132,132, 6,475,556, 6,645,552 and 6,413,011 all describe the use of large particle silica gel (Silica S21), alumina, silica-aluminas, silicas and silicates as extenders in paint formulations. Extenders are inactive materials present in any paint formulation to improve color and flow properties of the paint.

U.S. Patent No. 5,340,870 describes the use of a filler such as calcium carbonate added to an acrylic binder to increase the viscosity and dry time of the paint. The filler is added at a 60-75% ratio relative to the binder. Because of the high content of the inorganic filler the paint dries fast but its storage stability is poor and it does not give durable markings once applied on roads.

U.S. Patent No. 6,333,068 describes the use of metallic polychloride and synthetic polyamides as accelerators. These accelerators dry the 0.381 mm (15 mil) thickness waterborne paint fast.

U.S. Patent No. 5,922,398 describes the use of pendant amino-containing polymer along with acrylic polymers so that the pH is adjusted to provide for fast drying. The coatings achieved with this system are described as having a wet film thickness of 0.381 mm (15 mil).

Although the systems discussed in the patents above were able to speed up drying time of the highway paint, they were not able to achieve waterborne traffic markings having a thickness greater than 0.762 mm (30 mil) wet thickness. At such a thickness, the underlying roadway will need to be repainted on an annual basis. Moreover, the ion exchange resins described above absorb water at the same time the sulfonic acid group slowly reacts with acrylic resins thus weakening the resin. In addition, the brown color of the ion exchange resin makes the white highway marking line dirty and brown spots are seen after the traffic lines are striped. There is a need for a waterborne traffic marking system which has greater thickness and increased durability and will not discolor the marking stripe.

### Summary of the Invention

Highly durable thick lane markings have been typically applied by using thermoplastic binders at 2.032-3.048 mm (80-120 mil) wet thickness which are applied at high temperature (300-400 °F). Waterborne paint on the other hand is applied at ambient temperatures and is easier to make traffic markings. However, waterborne paint has not been used at these thicknesses because they require more time to dry and as the wet film thickness increases the liquid paint, although viscous, tends to flow sideways and run. The present invention provides a waterborne paint composition for highway traffic markings, in accordance with claim 1, which can be applied at greater thicknesses than the current waterborne latex paint. The present invention also enables application of retroreflective elements on the thick paint layer to achieve retroreflective traffic markings.

In an embodiment, the present invention is a waterborne paint of 1.016-3.048 mm (40-120 mil) wet thickness with improved durability and retroreflectivity. The paint composition may use regular waterborne latex paint, retroreflective glass beads, porous silica having a pore volume and particle size as defined in the claims, and optionally an acrylic emulsion in water. The porous silica helps to form a highly viscous paint composition with glass beads through hydrogen bonding and reducing the pH of the latex paint. This paint provides very cost effective and environmentally friendly traffic markings of high thickness and an alternative to thermo plastic markings which requires high temperature to apply and are very expensive compared to waterborne paint.

The porous silicon oxide drying agent absorbs water and is four times more efficient than ion exchange resin. This improved efficiency permits a lesser amount of drying agent with the paint. Porous silicon oxide has no acid group present but only hydroxy groups which do not react with acrylic resins.

Existing waterborne traffic markings obtain faster drying times by using ion exchange resins. Even with such faster drying times, these existing systems can only achieve relatively thin paint layers of 0.381-0.762 mm (15-30 mil) wet thickness. The present invention in embodiments uses retroreflective glass beads, porous silica having a pore volume and particle size as defined in the claims, and optionally an acrylic emulsion in water to apply a thick paint layer having a wet thickness of 1.016-3.048 mm (40 -120 mil) with improved durability. The use of acrylic emulsion is optional depending on the road conditions.

### Brief Description of the Drawings

Figure 1 is a schematic representation of a porous silica of the present invention applied to a paint layer.
Figure 2 is a schematic representation of a porous silica of the present invention applied to a paint layer after the paint layer has dried.
Figure 3 is a schematic representation of an ion exchange resin applied to a paint layer.
Figure 4 is a schematic representation of an ion exchange resin applied to a paint layer after the paint layer has dried.

### Detailed Description of the Preferred Embodiments

The present invention utilises a fast drying silicon oxide drying agent for waterborne paints used in traffic markings on road, airport and other surfaces. Though silicas and silicates have been used as extenders in prior paint formulation, those silicas and silicates did not possess water absorption properties because they are large particle size inorganics and they are nonporous. Since these nonporous materials are not capable of absorbing water, they are suited for use as extenders in water based paint formulations.

It has been found that the porous properties of silicon oxides are in reducing the drying time of waterborne paints by absorbing water in the pores. Porous silicon oxide can added to the paint during or after the traffic markings are striped on a road surface. Optionally, porous silica can be mixed with retroreflective glass beads and then applied to paint during or after traffic markings are applied.

The porous silicon dioxide used in the present invention has a pore volume of 0.3 cc/g to 3.0 cc/g, more preferably of 0.8 cc/g to 2.5 cc/g, and even more preferably from 1.0 cc/g to 1.8 cc/g. The amount of porous silica which can be added to the paint can range from 1% to 20% wt/wt, preferably from 1% to 10%. The amount of silicon oxide used can be adjusted depending on the pore volume of the silicon oxide.

Porous silicon oxide can be mixed with other drying agents such as ion exchange resins and the blend can be used as drying agents for water borne paints. Other porous inorganic materials like porous aluminum oxide or porous zeolites (alumino silicates) are also used as drying agents for waterborne paints. Most commercially available zeolites are in powder form and though they are efficient as drying agents, their use is limited because of the powder nature. Applying a powder to paint, while striping on a road surface, is not practical. Moreover, large particle size zeolites are less efficient in drying.

Porous silicon oxides used in this invention are particles, size ranging from 2.00 mm (10 US Mesh) to 0.105 mm (140 US Mesh), preferably from 1.19 mm (16 US Mesh) to 0.149 mm (100 US Mesh), and the optional product is from 1.00 mm (18 US Mesh) to 0.177 mm (80 US Mesh).

Porous silicon oxide particles can be blended with retroreflective glass beads of refractive index from 1.5 to 2.2, preferably from 1.5 to 1.9. Retroreflective glass beads particle size can be from 2.00 mm (10 US Mesh) to 0.074 mm (200 US Mesh), preferably from 1.41 mm (14 US Mesh) to 0.088 mm (170 US Mesh).

In addition to drying efficiency difference, porous silica and typical ion exchange resins such as Dow Chemical's Fast Track QS-2 differ in their particle size and surface properties. Ion exchange resins are typically hollow round polymers whose surface is mostly hydrophobic due to a styrene backbone. Ion exchange resins are made from styrene as the major monomer and styrene sulfonic acid as a minor monomer. In contrast, porous silica is cross linked polymeric network of silicon and oxygen atoms having hydroxyl groups on the surface. Porous silica particles are also of various and irregular shapes.

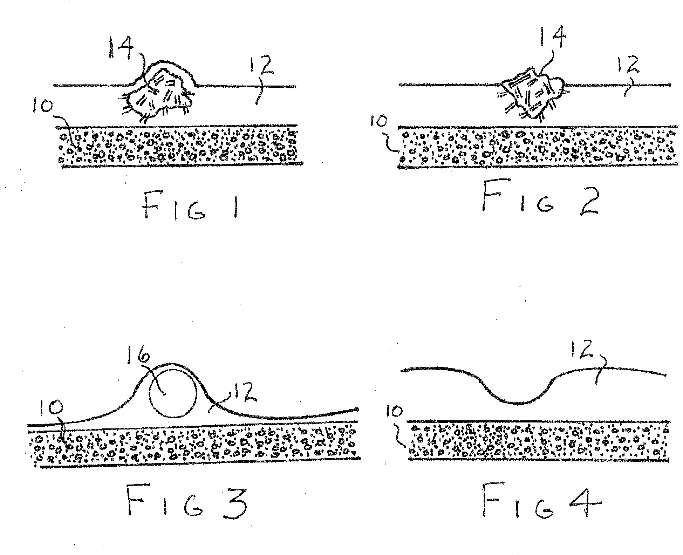

As shown in Figure 1, silica particles 14 are provided in paint layer 12 which is applied to roadway surface 10. Silica particles 14 provide mechanical bonding between the paint 12 and silica 14 after the coating is dried. As shown in Figure 2, after the paint layer 12 has dried, silica particle 14 will remain bonded in paint layer 12.

Figure 3 shows ion exchange resin particles 16 provided in paint layer 12. The round shape and smooth surface of resin particles 14 provides minimal mechanical bonding between the resin particle 16 and paint 12 after the paint has dried. As shown in Figure 4, after the paint layer 12 has dried, resin particle 16 can readily escape leaving a void in the paint layer 12/

The surface hydroxyl groups of porous silica form efficient hydrogen bonding with the acrylic polymers of the latex paint, whereas the styrene backbone of the ion exchange resin has no functionality for hydrogen bonding. The few sulfonic acid groups present in the ion exchange resin first react with the ammonium salt of paint layer 12 and only the remaining unreacted sulfonic acid groups form hydrogen bonds with paint layer 12.

The waterborne latex paint used in this invention can be the regular paint used for highway traffic markings. Examples include paints from Sherwin Williams or Ennis.

The glass beads added to the paint are retroreflective beads having a particle size ranging from 0.841 to 0.074 mm (20 to 200 US Mesh). The advantage of providing these beads inside the paint layer is to increase the retroreflectivity as the paint begins to wear.

Porous silica when added to the paint helps to increase the viscosity of the paint through strong hydrogen bonding with acrylic polymer and water. This also reduces the pH of the paint which is usually basic. Porous silica is acidic with pH of 6-6.5. It is presently believed that the acidic nature of the porous silica as well as the pores permits the present paint system to set up quicker and allow greater thicknesses.

When these three components, paint, glass beads and porous silica, are mixed, the overall formulation becomes more viscous than the paint, thus allowing the formulation to be sprayed or drawn down on surfaces like asphalt or others so that a wet film thickness of 1.524-3.048 mm (60-120 mil) can be achieved. Addition of an acrylic water based binder like Ropaque® Ultra EF, Rovene® 6018, and Rovene® 6020 helps the paint layer to dry easily without any cracks.

The retroreflective glass beads can be dropped over or otherwise mixed with the 1.524-3.048 mm (60-120 mil) thick paint layer to achieve retroreflectivity. Such glass beads include standard M247, Ultra 1.9®, VisiMax®, and Visibead®, all trademarks of Potters Industries.

Since the present invention deals with thick waterborne paint layer, bigger beads like Visibead® can also be added in the paint formulation that helps to maintain retroreflectivity better than small beads as the paint begins to wear. In addition, such larger beads also provide improved wet night visibility.

In a first aspect of the invention is provided a highway marking paint comprising:
a. waterborne latex paint; and
b. porous silica having a pore volume in the range of 1.0 cc/g to 3.0 cc/g and a particle size ranging from 2.00 mm (10 US Mesh) to 0.105 mm (140 US Mesh).

In embodiments of the first aspect, the porous silica has a pore volume in the range of 1.0 cc/g to 1.8 cc/g.

In the first aspect and its embodiments described above, the porous silica may constitute from 1 % to 20% by weight of the paint. Suitably, the porous silica constitutes from 1 % to 10% by weight of the paint.

In the first aspect and its embodiments described above, said porous silica has a particle size ranging from 2.00 mm (10 US Mesh) to 0.105 mm (140 US Mesh).

In the first aspect and its embodiments described above, the highway marking paint may further comprise an ion exchange resin. The ion exchange resin may be as defined according to any embodiment of the invention described herein.

In the first aspect and its embodiments described above, the highway marking paint may further comprise retroreflective glass beads. For instance, the highway marking paint may further comprise an ion exchange resin and reflective glass beads. The retroreflective glass beads may be as defined according to any embodiment of the invention described herein.

In a second aspect is provided a highway marking having a thickness of at least 1.016 mm (40 mil) comprising:
a. waterborne latex paint;
b. porous silica having a pore volume in the range of 1.0 cc/g to 3.0 cc/g and a particle size ranging from 2.00 mm (10 US Mesh) to 0.105 mm (140 US Mesh).

In embodiments of the second aspect, the highway marking further comprises retroreflective glass beads. The retroreflective glass beads may be as defined according to any embodiment of the invention described herein.

In the second aspect or its embodiments above, the highway marking may further comprise an ion exchange resin. The ion exchange resin may be as defined according to any embodiment of the invention described herein. For instance, the highway marking of the second aspect may further comprise an ion exchange resin and retroreflective glass beads.

In the second aspect or its embodiments above, the highway marking may have a thickness of at least 1.524 mm (60 mil). For instance, the highway marking may have a thickness of at least 1.524 mm (60 mil) and further comprise an ion exchange resin.

In the second aspect, or its embodiments above, the porous silica may be defined according to any embodiment of the first aspect described above.

In a third aspect is provided a method of applying a highway marking comprising the steps of:
a. providing a paint composition formed of a waterborne latex paint, porous silica having a pore volume in the range of 1.0 cc/g to 3.0 cc/g and a particle size ranging from 2.00 mm (10 US Mesh) to 0.105 mm (140 US Mesh), retroreflective glass beads and an acrylic polymer emulsion
b. applying said paint composition to a transportation corridor at a thickness of at least 1.016 mm (40 mil).

In embodiments of the third aspect, the porous silica is mixed with an ion exchange resin.

In the third aspect or embodiments above, the highway marking may be as defined according to the second aspect and embodiments described above.

In the third aspect or embodiments above, the porous silica may be defined according to any embodiment of the first aspect described above.

In the third aspect or embodiments above, the thickness of the paint composition may be as defined above for the highway marking of the second aspect or any of its embodiments.

### EXAMPLES

### Example 1

In a plastic beaker, 300 g of Sherwin Williams® white paint was added followed by 60 g of glass beads (0.177-0.074 mm [80-200 US mesh]) and 15 g of porous silica (1.00-0.177 mm [18-80 US mesh]). After mixing, the resulting paint composition was drawn down on a 15.24 x 45.72 cm (6x18 inch) glass panel using a blade with 2.54 mm (100 mil) gap. Standard M247 glass beads (coated with Potters® AC-110 formulation) were dropped over the paint layer and the composition was dried at room temperature.

In place of Standard M247 beads, other retroreflective beads such as Visibead®, VisiMax®, Ultra 1.9® beads can also be dropped.

### Example 2

In a plastic beaker, 300 g of Sherwin Williams® yellow paint was added followed by 60 g of glass beads (0.177-0.074 mm [80-200 US mesh]) and 15 g of porous silica (1.00-0.177 mm [18-80 US mesh]). After mixing, the resulting paint composition was drawn down on a 15.24 x 45.72 cm (6x18 inch) glass panel using a blade with 2.54 mm (100 mil) gap. Standard M247 glass beads (coated with Potters® AC-110 formulation) were dropped over the paint layer and the composition was dried at room temperature.

In place of Standard M247 beads, other retroreflective beads such as Visibead®, VisiMax®, Ultra 1.9® beads can also be dropped.

### Example 3

In a plastic beaker, 300 g of Sherwin Williams® white paint was added followed by 60 g of glass beads (0.177-0.074 mm [80-200 US mesh]) and 15 g of porous silica (1.00-0.177 mm [18-80 US mesh]). After mixing, the resulting paint composition was drawn down on a 15.24 x 45.72 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.297-0.177 mm (50/80 US mesh) bead, were dropped over the paint layer and the composition was dried at room temperature.

In place of Standard M247 beads, other retroreflective beads such as Visibead®, VisiMax®, Ultra 1.9® beads can also be dropped.

### Example 4

In a plastic beaker, 300 g of Sherwin Williams® yellow paint was added followed by 60 g of glass beads (0.177-0.074 mm [80-200 US mesh]) and 15 g of porous silica (1.00-0.177 mm [18-80 US mesh]). After mixing, the resulting paint composition was drawn down on a 15.24 x 45.72 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.297-0.177 mm (50/80 US mesh) bead, were dropped over the paint layer and the composition was dried at room temperature.

In place of Standard M247 beads, other retroreflective beads such as Visibead®, VisiMax®, Ultra 1.9® beads can also be dropped.

### Example 5

In a plastic beaker, 300 g of Sherwin Williams® yellow paint was added followed by 60 g of Visibead® beads and 15 g of porous silica (1.00-0.177 mm [18-80 US mesh]). After mixing, the resulting paint composition was drawn down on a 15.24 x 45.72 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.297-0.177 mm (50/80 US mesh) bead were dropped over the paint layer and the compostion was dried at room temperature.

In place of Standard M247 beads, other retroreflective beads such as Visibead®, VisiMax®, Ultra 1.9® beads can also be dropped.

### Example 6

In a plastic beaker, 300 g of Sherwin Williams® white paint was added followed by 60 g of glass beads (0.177-0.074 mm [80-200 US mesh]),15 g of porous silica (1.00-0.177 mm [18-80 US mesh]), and 15 g of acrylic emulsion Ropaque® Ultra EF (DOW). After mixing, the resulting paint composition was drawn down on a 15.24 x 45.72 cm (6x18 inch) glass panel using a blade with 2.54 mm (100 mil) gap. Standard M247 glass beads (coated with Potters® AC-110 formulation) were dropped over the paint layer and the composition was dried at room temperature.

In place of Standard M247 beads, other retroreflective beads such as Visibead®, VisiMax®, Ultra 1.9® beads can also be dropped.

Instead of Ropaque® acrylic emulsion, other acrylic emulsion like Rovene® 6018 or Rovene® 6020 can also be used.

### Example 7

In a plastic beaker, 300 g of Sherwin Williams® yellow paint was added followed by 60 g of glass beads (0.177-0.074 mm [80-200 US mesh]), 15 g of porous silica (1.00-0.177 mm [18-80 US mesh]), and 15 g of acrylic emulsion Ropaque® Ultra EF (DOW). After mixing, the resulting paint composition was drawn down on a 15.24 x 45.72 cm (6x18 inch) glass panel using a blade with 2.54 mm (100 mil) gap. Standard M247 glass beads (coated with Potters® AC-110 formulation) were dropped over the paint layer and the composition was dried at room temperature.

In place of Standard M247 beads, other retroreflective beads such as Visibead®, VisiMax®, Ultra 1.9® beads can also be dropped.

Instead of Ropaque® acrylic emulsion, other acrylic emulsion like Rovene® 6018 or Rovene® 6020 can also used.

### Example 8 - Flow properties:

One hundred and fifty grams of Sherwin Williams waterborne latex paint with or without either glass beads or porous silica gel was placed in a metal can and then the can was placed at a 45 degree angle and the contents were allowed to flow and captured in another container placed below. The weight of the material flowed to the second can was determined which is the flow rate. The higher the flow rate percentage, the less viscous are the contents. The low viscosity allows the formulation to be applied at higher wet mil thickness. Table 1 illustrates the effect of silica gel on the viscosity of the formulation.

**TABLE 1**

| Formulation | Flow rate |
|---|---|
| SW paint (150g) | 89% |
| SW paint (150 g)+30g M247 beads | 89% |
| SW paint (150 g)+30g M247 beads + 7.5g porous silica gel | 77% |

### Example 9 - Road trials:

Trial 1: At the truck speed of 1.61 kph (1 mph), the product described Example 1 (60 g of glass beads (0.177-0.074 mm [80-200 US mesh]) and 15 g of porous silica (1.00-0.177 mm [18-80 US mesh]) was injected into the paint stream at 0.23-0.36 kg/liter of paint. The thickness of the traffic markings was at 1.27-1.397 wet mm (50-55 wet mil) and the drying time was about 30 min. The drop on bead for retro reflectivity on this marking was the standard M247 AC110 glass beads (Potters Industries).
Trial 2: At the truck speed of 3.22 kph (2 mph), the product described in Example 1 (60 g of glass beads (0.177-0.074 mm [80-200 US mesh]) and 15 g of porous silica (1.00-0.177 mm [18-80 US mesh]) was injected into the paint stream at 0.6 kg/liter of paint. The thickness of the traffic markings was at 1.016-1.27 wet mm (40-50 wet mil) and the drying time was about 20 min. The drop on bead for retro reflectivity on this marking was the standard M247 AC110 glass beads (Potters Industries).
Trial 3: At the truck speed of 4.83 kph (3 mph), the product described in Example 1 (60 g of glass beads (0.177-0.074 mm [80-200 US mesh]) and 15 g of porous silica (1.00-0.177 mm [18-80 US mesh]) was injected into the paint stream at 1.2 kg/liter of paint. The thickness of the traffic markings was at 1.524-1.778 wet mm (60-70 wet mil) and the drying time was about 5 min. The drop on bead for retro reflectivity on this marking was the standard M247 AC110 glass beads (Potters Industries).

### Experimental procedure:

The following experiment was conducted to determine the drying efficiency of porous silicon oxides. In a 4 oz. plastic cup, 20 g of waterborne latex paint (Sherwin Williams yellow paint) was placed and 3.3 g of the drying agent was added to the paint and stirred by hand using a wood spatula (wood applicator). The time took from the beginning until the paint can't be stirred any more (completely solidified) is determined and shown in Table 2 below.

**TABLE 2**

| Products | Time took for the paint to solidify completely |
|---|---|
| Paint without any drying agent | >80 min |
| Ion Exchange Resin QS-2 (Dow Chemical commercial product) | 40-45 sec |
| Large particle Silica gel (non porous, 3.36 mm - 2.00 mm (6-10 US Mesh) | >50 min |
| Large particle Silica gel (non porous, 1.41 mm to 0.841 mm (14-20 US Mesh) | >50 min |
| Porous Silicon oxide (pore volume 0.83 cc/g) | 2 min |
| Porous Silicon oxide (pore volume 1.0 cc/g) | 20-25 sec |
| Porous Silicon oxide (pore volume 1.4 cc/g) | 10-12 sec |
| Porous Silicon oxide (pore volume 1.8 cc/g) | 10-12 sec |
| Porous Silicon oxide (pore volume 2.5 cc/g) | 5-8 sec |
| Porous Silicon oxide (pore volume 3.0 cc/g) | 4-5 sec |
| Porous Silicon oxide (pore volume 1.8 cc/g) 1g silica for 20 g paint | 20-25 sec |
| Porous Silicon oxide (pore volume 3.0 cc/g) 1g silica for 20 g paint | 10-12 sec |
| Zeolite CBV 760 (porous,powder) 3.3 g | 10-12 sec |
| Zeolite CBV 100 extrude Large particle porous silica | 5 min |

These experiments show as the pore volume increases the drying time decreases. The drying time can be adjusted by increasing or decreasing the amount of porous silica gel. Drying time is depended on the quality of paint (amount of water in the composition).

### Experimental design for dry time comparison in prototype traffic marking:

Using a hand held spray gun (2.27 L [2 quart] volume, 206.84-413.69 kPa [30-60 psi] pressure), Sherwin Williams yellow water borne paint TM 2153 (0.5 L) was poured into the container and the air pressure was set at 276 kPa (40 psi). From a height of about 30.48 cm (12 inches) paint was sprayed on a 15.24 cm (6 inch) x 30.48 cm (12 inch) aluminum panel using the spray gun. After spraying one time the wet mil thickness was measured and specific quantity of drying agent was dropped from a drop box, immediately after this a second layer of paint was sprayed on this thereby sandwiching the drying agent. By adjusting the gun pressure the wet mil thickness of the coating can be controlled when sprayed. Retroreflective glass beads were dropped on the second layer of coating and the dry time was measured by drawing a line across the panel using wood applicator (examples 10-13, below). When the layer is completely dried no more line can be drawn with wood applicator and the time it took from the start is marked as dry time.

### Example 10:

After spraying a first layer paint of 0.635 mm (25 mil) wet thickness, 14 g of a 2:1 blend of AASHTO Type I glass beads and Dow Chemical ion exchange resin Fast Track QS-2 was dropped on the paint layer. Immediately a second layer of paint was sprayed (0.635 mm [25 mil] wet thickness) followed by 18 g of AASHTO Type I retroreflective glass beads. It took 13 minutes to dry for this marking.

### Example 11:

Example 10 was repeated except, instead of Fast Track QS-2 resin, 14 g of a 2:1 blend of AASHTO Type I glass beads and porous silica described in this invention was used. The dry time for this marking is 6 minutes.

### Example 12:

After spraying a first layer paint of 0.3556 mm (14 mil) wet thickness, 5 g of Dow Chemical ion exchange resin Fast Track QS-2 was dropped on the paint layer. Immediately a second layer of paint was sprayed (0.3556 mm [14 mil] wet thickness) followed by 18 g of AASHTO Type I retroreflective glass beads. It took 4 minutes to dry for this marking.

### Example 13:

Example 12 was repeated except, instead of Dow Fast Track QS-2 resin, 5 g of porous silica described in this invention was used. The dry time for this marking is 2 minutes.

### Example 14 (control without drying agent)

In a plastic beaker, 150 g of Sherwin Williams yellow paint was added followed by 30 g of small glass beads (0.177-0.074 mm [80-200 US Mesh]) and mixed by hand for 15 seconds. The resulting paint composition was drawn down on a 15.24 cm (6 inch) x 30.48 cm (12 inch) aluminum panel using a blade with 2.54 mm (100 mil) gap and AASHTO M247 glass beads (coated with Potters AC-110 formulation) were dropped over the paint layer from a drop box. The composition was dried at room temperature and the dry time was measured by drawing a line across the panel using wood applicator. It took about 120 minutes to dry.

### Example 15: (with Fast track QS-2)

In a plastic beaker, 150 g of Sherwin Williams yellow paint was added followed by 30 g of small glass beads (0.177-0.074 mm [80-200 US Mesh]) and 7.5 g of drying agent Fast Track QS-2 and mixed by hand for 15 seconds. The resulting paint composition was drawn down on a 15.24 cm (6 inch) x 30.48 cm (12 inch) aluminum panel using a blade with 2.54 mm (100 mil) gap and AASHTO M247 glass beads (coated with Potters AC-110 formulation) were dropped over the paint layer from a drop box. The composition was dried at room temperature and the dry time was measured by drawing a line across the panel using wood applicator. It took about 70 minutes to dry.

### Example 16:

In a plastic beaker, 150 g of Sherwin Williams yellow paint was added followed by 30 g of small glass beads (0.177-0.074 mm [80-200 US Mesh]) and 7.5 g of porous silica (1.00-0.177 mm [18-80 US Mesh]) and mixed by hand for 15 seconds. The resulting paint composition was drawn down on a 15.24 cm (6 inch) x 30.48 cm (12 inch) aluminum panel using a blade with 2.54 mm (100 mil) gap and AASHTO M247 glass beads (coated with Potters AC-110 formulation) were dropped over the paint layer from a drop box. The composition was dried at room temperature and the dry time was measured by drawing a line across the panel using wood applicator. It took about 40 minutes to dry.

### Example 17:

In a plastic beaker, 150 g of Sherwin Williams yellow paint was added followed by 30 g of small glass beads (0.177-0.074 mm [80-200 US Mesh]) and 4 g of porous silica (1.00-0.177 mm [18-80 US Mesh]) and mixed by hand for 15 seconds. The resulting paint composition was drawn down on a 15.24 cm (6 inch) x 30.48 cm (12 inch) aluminum panel using a blade with 2.54 mm (100 mil) gap and AASHTO M247 glass beads (coated with Potters AC-110 formulation) were dropped over the paint layer from a drop box. The composition was dried at room temperature and the dry time was measured by drawing a line across the panel using wood applicator. It took about 60 minutes to dry.

### Effect of drying agents color on white traffic paint:

On a small aluminum panel (7.62 cm (3 inch) x 15.24 cm (6 inch)), Sherwin Williams white traffic paint (TM 2152) coated at 0.381 mm (15 mil) wet thickness using a drawdown blade and this is a control for starting color. On a second panel on the white paint at 0.381 mm (15 mil) wet thickness 3 g of drying agent Fast track QS-2 was dropped using a drop box. On a third panel on the white paint at 0.381 mm (15 mil) wet thickness 3 g of drying agent porous silica was dropped using a drop box. All three panels were dried at room temperature overnight and the color was measured using a Konica-Minolta colorimeter. The drying agent QS-2, a brown color beads, affects the color of the white paint and the color data is shown below.

| | L | a | b | dE |
|---|---|---|---|---|
| White paint | 90.34 | -0.17 | 3.21 | Control |
| White paint and porous silica | 91.87 | -0.06 | 4.41 | 1.95 |
| White paint and QS-2 | 88.65 | 1.82 | 13.09 | 10.23 |

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Use of the term "about" should be construed as providing support for embodiments directed to the exact listed amount. No language in the specification should be construed as indicating any non-claimed element as essential to the practice of the invention.

Although the present invention has been described with respect to its application in highway marking paint compositions, it is to be distinctly understood that the present invention can be used in connection with other waterborne paints.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A highway marking paint comprising:
a. waterborne latex paint; and
b. porous silica having a pore volume in the range of 1.0 cc/g to 3.0 cc/g and a particle size ranging from 2.00 mm (10 US Mesh) to 0.105 mm (140 US Mesh).

2. The highway marking paint of claim 1 wherein the porous silica has a pore volume in the range of 1.0 cc/g to 2.5 cc/g.

3. The highway marking paint of claim 1 or claim 2 wherein the porous silica constitutes from 1 % to 20% by weight of the paint.

4. The highway marking paint of any previous claim wherein the porous silica has a pore volume in the range of 1.0 cc/ g to 1.8 cc/g.

5. The highway marking paint of any previous claim wherein the porous silica constitutes from 1% to 10% of the paint.

6. The highway marking paint of any previous claim further comprising an ion exchange resin.

7. The highway marking paint of any previous claim further comprising retroreflective glass beads.

8. A highway marking having a thickness of at least 1.016 mm (40 mil) comprising:
a. waterborne latex paint;
b. porous silica having a pore volume in the range of 1.0 cc/g to 3.0 cc/g and a particle size ranging from 2.00 mm (10 US Mesh) to 0.105 mm (140 US Mesh).

9. The highway marking of claim 8 further comprising retroreflective glass beads.

10. The highway marking of claim 8 or 9 further comprising an ion exchange resin.

11. The highway marking of any one of claims 8 to 10 having a thickness of at least 1.524 mm (60 mil).

12. A method of applying a highway marking comprising the steps of:
a. providing a paint composition formed of a waterborne latex paint, porous silica having a pore volume in the range of 1.0 cc/g to 3.0 cc/g and a particle size ranging from 2.00 mm (10 US Mesh) to 0.105 mm (140 US Mesh), retroreflective glass beads and an acrylic polymer emulsion; and
b. applying said paint composition to a transportation corridor at a thickness of at least 1.016 mm (40 mil).

13. The method claim 12 wherein the porous silica is mixed with an ion exchange resin.

## Patentansprüche

1. Straßenmarkierungsfarbe umfassend:
a. Latexfarbe auf Wasserbasis; und
b. poröses Siliciumdioxid, das ein Porenvolumen im Bereich von 1,0 cm³/g bis 3,0 cm³/g und eine Teilchengröße im Bereich von 2,00 mm (10 US Maschen) bis 0,105mm (140 US Maschen) aufweist.

2. Straßenmarkierungsfarbe nach Anspruch 1, wobei das poröse Siliciumdioxid ein Porenvolumen im Bereich von 1,0 cm³/g bis 2,5 cm³/g aufweist.

3. Straßenmarkierungsfarbe nach Anspruch 1 oder Anspruch 2, wobei das poröse Siliciumdioxid 1 bis 20 Gew.-% der Farbe darstellt.

4. Straßenmarkierungsfarbe nach einem der vorhergehenden Ansprüche, wobei das poröse Siliciumdioxid ein Porenvolumen im Bereich von 1,0 cm³/g bis 1,8 cm³/g aufweist.

5. Straßenmarkierungsfarbe nach einem der vorhergehenden Ansprüche, wobei das poröse Siliciumdioxid 1 % bis 10 % der Farbe darstellt.

6. Straßenmarkierungsfarbe nach einem der vorhergehenden Ansprüche, ferner ein Ionenaustauschharz umfassend.

7. Straßenmarkierungsfarbe nach einem der vorhergehenden Ansprüche, ferner retroreflektierende Glasperlen umfassend.

8. Straßenmarkierung, die eine Dicke von mindestens 1,016mm (40 mil) aufweist, umfassend:
a. Latexfarbe auf Wasserbasis;
b. poröses Siliciumdioxid, das ein Porenvolumen im Bereich von 1,0 cm³/g bis 3,0 cm³/g und eine Teilchengröße im Bereich von 2,00 mm (10 US Maschen) bis 0,105mm (140 US Maschen) aufweist.

9. Straßenmarkierung nach Anspruch 8, ferner retroreflektierende Glasperlen umfassend.

10. Straßenmarkierung nach Anspruch 8 oder 9, ferner ein Ionenaustauschharz umfassend.

11. Straßenmarkierung nach einem der Ansprüche 8 bis 10, die eine Dicke von mindestens 1,524 mm (60 mil) aufweist.

12. Verfahren zum Auftragen einer Straßenmarkierung, umfassend die Schritte des:
a. Bereitstellens einer Farbenzusammensetzung, die aus einer Latexfarbe auf Wasserbasis, porösem Siliciumdioxid, das ein Porenvolumen im Bereich von 1,0 cm³/g bis 3,0 cm³/g und eine Teilchengröße im Bereich von 2,00 mm (10 US Maschen) bis 0,105 mm (140 US Maschen) aufweist, retroreflektierenden Glasperlen und einer Acrylpolymeremulsion gebildet ist; und
b. Auftragens der Farbenzusammensetzung auf einen Transportkorridor in einer Dicke von mindestens 1,016 mm (40 mil).

13. Verfahren nach Anspruch 12, wobei das poröse Siliciumdioxid mit einem Ionenaustauschharz gemischt ist.

## Revendications

1. Peinture de marquage routier comprenant:
a. une peinture à base de latex à base d'eau; et
b. de la silice poreuse présentant un volume de pore situé dans la plage de 1,0 cc/g à 3,0 cc/g et une taille de particule s'étendant de 2,00 mm (10 mesh US) à 0,105 mm (140 mesh US).

2. Peinture de marquage routier selon la revendication 1, la silice poreuse présentant un volume de pore situé dans la plage de 1,0 cc/g à 2,5 cc/g.

3. Peinture de marquage routier selon la revendication 1 ou la revendication 2, la silice poreuse constituant de 1 % à 20 % en poids de la peinture.

4. Peinture de marquage routier selon l'une quelconque des revendications précédentes, la silice poreuse présentant un volume de pore situé dans la plage de 1,0 cc/g à 1,8 cc/g.

5. Peinture de marquage routier selon l'une quelconque des revendications précédentes, la silice poreuse constituant de 1 % à 10 % de la peinture.

6. Peinture de marquage routier selon l'une quelconque des revendications précédentes comprenant en outre une résine échangeuse d'ions.

7. Peinture de marquage routier selon l'une quelconque des revendications précédentes comprenant en outre des billes de verre rétroréfléchissantes.

8. Marquage routier présentant une épaisseur d'au moins 1,016 mm (40 mils) comprenant:
a. une peinture à base de latex à base d'eau;
b. de la silice poreuse présentant un volume de pore situé dans la plage de
1,0 cc/g à 3,0 cc/g et une taille de particule s'étendant de 2,00 mm (10 mesh US) à 0,105 mm (140 mesh US).

9. Marquage routier selon la revendication 8 comprenant en outre des billes de verre rétroréfléchissantes.

10. Marquage routier selon la revendication 8 ou 9 comprenant en outre une résine échangeuse d'ions.

11. Marquage routier selon l'une quelconque des revendications 8 à 10 présentant une épaisseur d'au moins 1,524 mm (60 mils).

12. Procédé d'application d'un marquage routier comprenant les étapes :
a. de fourniture d'une composition de peinture formée d'une peinture à base de latex à base d'eau, de silice poreuse présentant un volume de pore situé dans la plage de 1,0 cc/g à 3,0 cc/g et une taille de particule s'étendant de 2,00 mm (10 mesh US) à 0,105 mm (140 mesh US), de billes de verre rétroréfléchissantes et d'une émulsion polymère acrylique; et
b. d'application de ladite composition de peinture à un couloir de transport sous une épaisseur d'au moins 1,016 mm (40 mils).

13. Procédé selon la revendication 12, la silice poreuse étant mélangée avec une résine échangeuse d'ions.
